# EUROPÄISCHE PATENTSCHRIFT

(11) **EP 1 760 376 B1**
(45) Veröffentlichungstag und Bekanntmachung des Hinweises auf die Patenterteilung: **12.12.2007**
(21) Anmeldenummer: 05018855.6
(22) Anmeldetag: 31.08.2005
(51) Int. Cl.: F16K 11/07, F16K 31/42

(54) **Vorgesteuertes Impulsventil**
Pilot operated impulse valve
Vanne à impulsion servo-commandée

(43) Veröffentlichungstag der Anmeldung: 07.03.2007
(73) Patentinhaber: FESTO AG & Co, 73734 Esslingen (DE)
(72) Erfinder: Räpke, Falk, 73760 Ostfildern (DE); Bogdanowicz, Grzegorz, 73760 Ostfildern (DE)
(74) Vertreter: Vogler, Bernd

(56) Entgegenhaltungen:
- DE-A1- 2 422 593
- US-A- 3 304 126
- US-A- 3 326 236
- US-A- 3 465 686
- US-A- 3 794 075
- US-A- 4 203 571
- US-A- 5 174 731
- US-A- 5 666 994

## Beschreibung

Die Erfindung betrifft ein vorgesteuertes Impulsventil, mit einem durch eine Vorsteuerventileinrichtung fluidisch betätigbaren Hauptventil, das einen in einem Ventilgehäuse durch impulsartige axiale Fluidbeaufschlagung zwischen zwei axialen Endstellung umschaltbaren Ventilschieber aufweist, wobei wenigstens einem axialen Endbereich des Ventilschiebers Haltemittel zur lösbaren gehäusefesten Fixierung des eine Endstellung einnehmenden, axial nicht fluidbeaufschlagten Ventilschiebers zugeordnet sind, wobei die Haltemittel eine in axialer Verlängerung des Ventilschiebers gehäusefest angeordnete Permanentmagneteinrichtung enthalten, die den die zugeordnete Endstellung einnehmenden Ventilschieber durch Magnetkraft festhält.

Impulsventile sind Mehrwegeventile, deren Ventilschieber zum Umschalten zwischen zwei Endstellungen impulsartig mittels eines fluidischen Steuerdruckes beaufschlagt werden, wobei der Ventilschieber die Endstellung auch nach der Wegnahme des Steuerdruckes beibehält. Solche Ventile haben den Vorteil, dass die Schaltstellungen des Ventilschiebers ohne ständige Energiezufuhr praktisch beliebig lange beibehalten werden können. Damit der Ventilschieber auch bei Erschütterungen in der jeweiligen Endstellung verharrt, sind jedoch zusätzliche Haltemittel vorzusehen, die eine lösbare gehäusefeste Arretierung des Ventilschiebers bewirken.

Bei einem aus dem Fachbuch "Bauelemente der Pneumatik", Otto Krausskopf Verlag GmbH, Mainz, 1972, Seiten 259 bis 261 beschriebenen Impulsventil der eingangs genannten Art fungieren am Ventilschieber angeordnete Dichtungen durch das Zusammenwirken mit dem Ventilgehäuse als Haltemittel, die den Ventilschieber aufgrund der auftretenden mechanischen Reibung fixieren. Da die Dichtungen im Laufe der Zeit einem Verschleiß unterliegen, kann die Fixierung der Endstellungen jedoch nicht dauerhaft sicher gewährleistet werden. Alternativ wäre es zwar denkbar, als Rastmittel ausgebildete Haltemittel einzusetzen, bei denen jedoch gleichfalls eine Verschließproblematik auftreten würde.

In Verbindung mit direkt betätigten Magnetventilen ist es bereits bekannt, ein zwischen zwei Schaltstellungen bewegbares Ventilglied in einer der beiden Schaltstellungen durch Magnetkraft zu fixieren. Die EP 0 650 002 B1 beschreibt hierzu ein Magnetventil, dessen beweglicher Anker bei Erreichen einer Endstellung mit einem Eisenkern in Kontakt tritt, der sich rückseitig an einem gehäusefest fixierten Permanentmagnet abstützt. Da somit der Endaufprall des Ventilgliedes direkt in den Permanentmagnet eingeleitet wird, ist auch eine solche Anordnung für einen Einsatz bei Impulsventilen nicht angeraten, da dort der Ventilschieber zwischen seinen beiden Endstellungen eine relativ große Wegstrecke zurückzulegen hat und folglich mit relativ hoher Bewegungsenergie in der Endstellung eintrifft, was zu einer Beschädigung des Permanentmagneten führen könnte.

Gleiches gilt für das direkt betätigte Magnetventil der DE 196 36 781 C2. Auch dort ist dem Permanentmagnet ein aus ferromagnetischem Material bestehender Körper vorgelagert, auf den das Ventilglied auftrifft und der sich über einen Permanentmagnet am Gehäuse abstützt. Im übrigen lässt sich wie im Falle der EP 0 650 002 B1 die magnetische Haltekraft nur durch Verwendung unterschiedlich starker Permanentmagneteinrichtungen beeinflussen, was es relativ aufwendig macht, für unterschiedliche Betätigungskräfte ausgelegte Magnetventile bereit zu stellen, da man auf unterschiedliche Permanentmagneteinrichtungen zurückgreifen muss.

Bei einem aus der US-A-5 174 731 bekannten Impulsventil wird der Ventilschieber in den Endlagen durch Magnetkraft gehalten. Stirnseitig am Ventilschieber angeordnete Permanentmagnete haften entweder an der stirnseitigen Abschlusswand des Ventilgehäuses oder - wenn das Ventilgehäuse aus Kunststoffmaterial besteht - an einem weiteren Permanentmagnet, der an der Innenfläche des Ventilgehäuses angebracht ist.

Die US-A-3 304 126 beschreibt ein Ventil, dessen Ventilglied stirnseitig mit Permanentmagneten bestückt ist. Diese kooperieren zum Festhalten der Endlage mit weiteren Permanentmagneten, die in Ausnehmungen der Abschlussdeckel des Ventilgehäuses untergebracht sind.

Es ist die Aufgabe der vorliegenden Erfindung, bei einem vorgesteuerten Impulsventil Maßnahmen vorzusehen, die eine wenig verschleißanfällige Fixierung des Ventilschiebers in der betreffenden Endstellung ermöglichen und die überdies kostengünstig realisierbar sind.

Zur Lösung dieser Aufgabe ist bei einem Impulsventil der eingangs genannten Art vorgesehen, dass der Ventilschieber in der durch Magnetkraft gehaltenen Endstellung mit einem nicht durch ferromagnetisches Material überbrückten axialen Abstand zur Permanentmagneteinrichtung angeordnet ist, der durch eine axial zwischen der Permanentmagneteinrichtung und dem Ventilschieber angeordnete, mit der zugewandten Stirnseite des Ventilschiebers zusammenarbeitende Anschlageinrichtung vorgegeben ist, die unabhängig von der Permanentmagneteinrichtung axial gehäusefest abgestützt ist, wobei die Anschlageinrichtung vom Boden eines topfförmigen Körpers gebildet ist, der mit vom Ventilschieber axial abgewandter Öffnung in eine den Ventilschieber enthaltende Schieberaufnahme eingesetzt ist, wobei er sich mit der Stirnfläche seiner Umfangswand axial an der die Schieberaufnahme begrenzenden gehäuseseitigen Abschlusswand abstützt und wobei in dem zwischen des topfförmigen Körper und der gehäuseseitigen Abschlusswand.definierten Aufnahmeraum die Permanentmagneteinrichtung untergebracht ist.

Das auf Magnetkraft basierende Funktionsprinzip der erfindungsgemäßen Haltemittel ermöglicht einen äußerst verschleißarmen Betrieb und gewährleistet eine hohe Lebensdauer des Impulsventils ohne nennenswertes Nachlassen der Haltekräfte. Der Aufprall des Ventilschiebers bei Erreichen seiner Endstellung wird durch eine von der Permanentmagneteinrichtung unabhängige Anschlageinrichtung aufgefangen und unter Umgehung der Permanentmagneteinrichtung in das Ventilgehäuse eingeleitet, so dass die Permanentmagneteinrichtung kaum einer mechanischen Belastung ausgesetzt ist und folglich nicht Gefahr läuft, beschädigt oder gar zerstört zu werden. Indem der in der Endstellung zwischen dem Ventilschieber und der Permanentmagneteinrichtung vorhandene axiale Zwischenraum kein ferromagnetisches Material enthält, kann über die Änderung des axialen Abstandes die in der Endstellung auf den Ventilschieber einwirkende magnetische Haltekraft beeinflusst werden, insbesondere unter Berücksichtigung des im Betrieb auf den Ventilschieber einwirkenden Steuerdruckes. Man kann also bei Bedarf unter Verwendung ein und derselben Permanentmagneteinrichtung durch Veränderung des genannten axialen Abstandes je nach Ventiltyp unterschiedlich große magnetische Haltekräfte herbeiführen. Eine besonders einfache Montage und Befestigung der Permanentmagneteinrichtung ist möglich, da sie in einem Aufnahmeraum untergebracht ist, der zwischen der gehäusefesten stirnseitigen Abschlusswand der Schieberaufnahme und einem in die Schieberaufnahme eingesetzten topfförmigen Körper definiert ist. Der Boden des topfförmigen Körpers bildet hier gleichzeitig die Anschlageinrichtung. Über die sich an der Abschlusswand abstützende Stirnfläche der Umfangswand des topfförmigen Körpers werden die vom Ventilschieber eingeleiteten Aufprallkräfte unter Umgehung der Permanentmagneteinrichtung in das Ventilgehäuse abgeleitet.

Vorteilhafte Weiterbildungen der Erfindung gehen aus den Unteransprüche hervor.

Die Anschlageinrichtung könnte beispielsweise aus einem oder mehreren Vorsprüngen bestehen, die mit axialem Abstand zur Permanenteinrichtung radial in den Verstellweg des Ventilschiebers ragen. Zweckmäßig ist es allerdings, wenn der gesamte axiale Abstand zwischen der Permanentmagneteinrichtung und dem die Endstellung einnehmenden Ventilschieber durch die Anschlageinrichtung überbrückt wird. Diese besteht zweckmäßigerweise aus nichtferromagnetischem Material, wobei eine Ausgestaltung aus Kunststoffmaterial bevorzugt wird.

Um die gewünschte magnetische Anziehungskraft zu erreichen, kann der Ventilschieber vollständig oder zumindest im Bereich seines der Permanentmagneteinrichtung zugewandten Endabschnittes aus ferromagnetischem und insbesondere weichmagnetischem Material bestehen. Alternativ wäre es auch möglich, einen Ventilschieber aus nichtferromagnetischem Material einzusetzen, der an seinem der Permanentmagneteinrichtung zugewandten Endabschnitt mindestens ein Materialstück trägt, das über ferromagnetische und insbesondere weichmagnetische Eigenschaften verfügt.

Eine kurze Baulänge des Impulsventils bei gleichzeitig hoher magnetischer Haltekraft lässt sich erzielen, wenn die Permanentmagneteinrichtung scheibenförmig ausgebildet und koaxial zum Ventilschieber angeordnet ist. Zweckmäßigerweise besteht sie aus einem einzigen permanentmagnetischen Bauteil, beispielsweise aus einem dauermagnetischem Scheibenkörper.

Der topfförmige Körper kann Bestandteil eines insbesondere im wesentlichen hülsenförmigen Abstützelementes sein, das auch in axial entgegengesetzter Richtung eine Abstützwirkung entfaltet, indem es abstützend mit einer insbesondere hülsenförmig ausgebildeten, den Ventilschieber umschließenden Dichtungseinrichtung zusammenwirkt. Hierbei enthält es zweckmäßigerweise eine ausgehend von dem Boden in Richtung zum Ventilschieber ragende Abstützwand, an der die Dichtungseinrichtung anliegt.

Der topfförmige Körper und gegebenenfalls das Abstützelement bestehen zweckmäßigerweise zur Gänze aus Kunststoffmaterial.

Man kann somit problemlos mehrere solcher Bauteile bereitstellen, die sich in der Dicke des als Anschlageinrichtung fungierenden Bodens voneinander unterscheiden und die man von Fall zu Fall zur Bestückung eines Impulsventils in Abhängigkeit von der jeweils gewünschten Haltekraft einsetzen kann.

Um ungeachtet eventueller Fertigungstoleranzen eine axiale Beanspruchung der Permanentmagneteinrichtung auszuschließen, ist diese zweckmäßigerweise mit axialem Spiel zwischen der Anschlageinrichtung und der dieser axial gegenüberliegenden gehäuseseitigen Abschlusswand gehalten.

Zum Umschalten des Hauptventils kann eine dem Ventilschieber axial vorgelagerte Steuerkammer innerhalb der Schieberaufnahme mit einem den gewünschten Steuerdruck aufweisenden Antriebsfluid beaufschlagt werden. Die Zu- und Abfuhr des Antriebsfluides bezüglich der Steuerkammer erfolgt hierbei zweckmäßigerweise über einen die Anschlageinrichtung und die Permanentmagneteinrichtung durchsetzenden Vorsteuerkanal. Der entsprechende Endabschnitt des Vorsteuerkanals verläuft insbesondere zentral zu der Schieberaufnahme mit bezüglich dieser koaxialer Ausrichtung.

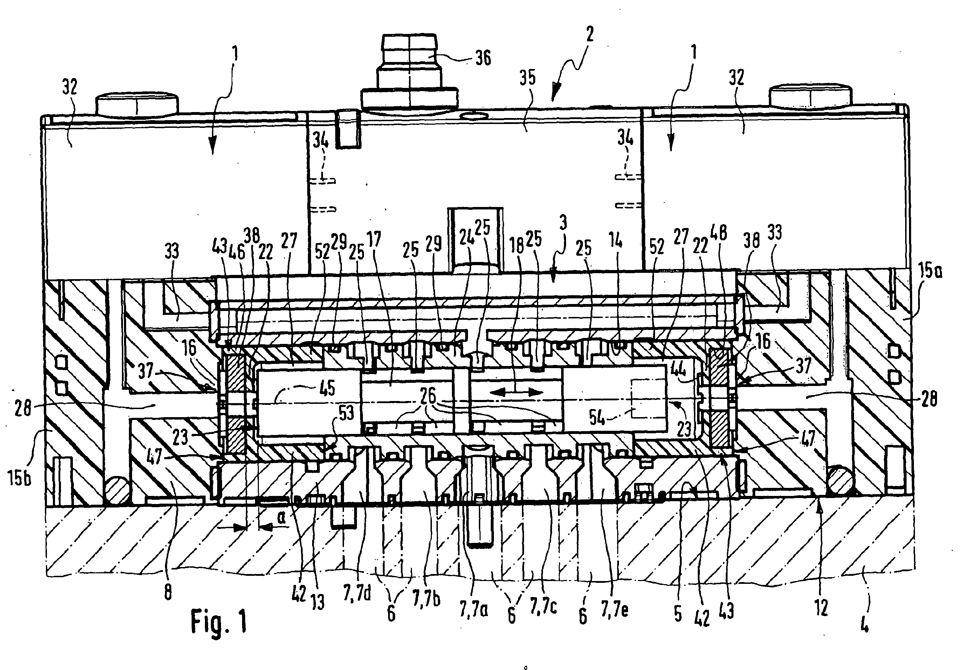

Nachfolgend wird die Erfindung anhand der beiliegenden Zeichnung näher erläutert. Die einzige Figur (Figur 1) zeigt eine bevorzugte Ausführungsform des erfindungsgemäßen vorgesteuerten Impulsventils in teilweiser Längsschnittdarstellung, wobei strichpunktiert eine Grundplatte angedeutet ist, auf der das Impulsventil montiert werden kann.

Die Zeichnung zeigt ein mittels einer elektrisch betätigbaren Vorsteuerventileinrichtung 1 vorgesteuertes Impulsventil 2, mit einem über die Vorsteuerventileinrichtung 1 fluidisch betätigbaren Hauptventil 3, das mit der Vorsteuerventileinrichtung 1 zu einer einheitlich handhabbaren Baugruppe zusammengefasst ist.

Das Impulsventil 2 ist auf einer strichpunktiert angedeuteten Grundplatte 4 montiert. An der entsprechenden Bestückungsfläche 5 der Grundplatte 4 münden Grundplattenkanäle 6 aus, die mit fluchtenden Ventilkanälen 7 kommunizieren, welche im Ventilgehäuse 8 des Hauptventils 3 verlaufen und gegenüberliegend den Grundplattenkanälen 6 an der der Bestückungsfläche 5 anliegenden Montagefläche 12 des Ventilgehäuses 8 ausmünden.

Das Ventilgehäuse 8 des Ausführungsbeispiels enthält ein längliches Mittelteil 13, das einen in Längsrichtung durchgehenden Hohlraum aufweist, der als Schieberaufnahme 14 fungiert. Stirnseitig beidseits an das Mittelteil 13 ist jeweils ein Abschlussteil 15a, 15b dicht angesetzt, das eine die Schieberaufnahme 14 endseitig verschließende Abschlusswand 16 bildet.

Koaxial in der Schieberaufnahme 14 ist ein bevorzugt kolbenartig gestalteter Ventilschieber 17 untergebracht. Er kann in Richtung seiner Längsachse unter Ausführung einer durch einen Doppelpfeil angedeuteten Umschaltbewegung 18 zwischen zwei Endstellungen umgeschaltet werden, von denen eine ersichtlich ist.

Beide Endstellungen werden jeweils durch eine ebenfalls in der Schieberaufnahme 14 platzierte Anschlageinrichtung 22 definiert. Jeder der beiden in einander entgegengesetzte axiale Richtungen weisenden Stirnflächen 23 des Ventilschiebers 17 ist eine solche Anschlageinrichtung 22, die sich gehäusefest abstützt, im Verstellweg liegend axial vorgelagert. Der Ventilschieber 17 hat eine Endstellung erreicht, wenn er mit einer seiner Stirnflächen 23 an der zugewandten Anschlageinrichtung 22 anliegt. Die entgegengesetzte Stirnfläche 23 nimmt dann einen der Umschaltstrecke entsprechenden Abstand zu der ihr zugeordneten Anschlageinrichtung 22 ein.

Eine den Ventilschieber 17 unter koaxialer Anordnung umschließende Dichtungseinrichtung 24 unterteilt die Schieberaufnahme 14 axial in mehrere mit jeweils einem der Ventilkanäle 7 kommunizierende Steuerabschnitte 25. Die Steuerabschnitte 25 sind axial beabstandet zueinander angeordnet und durch Dichtungsabschnitte 26 voneinander getrennt, die sich durch eine glatte kreiszylindrische Umfangsfläche auszeichnen.

Der Ventilschieber 17 ist in Längsrichtung mehrfach abgestuft und verfügt über abwechselnd angeordnete Längenabschnitte größeren und kleineren Durchmessers. Kommt ein Längenabschnitt größeren Durchmessers in einem Dichtungsabschnitt 26 zu liegen, bildet er eine Trennwand zwischen den beiden benachbarten Steuerabschnitten 25 und verhindert einen Fluidübertritt. Hingegen kann zwischen Steuerabschnitten 25, die im Bereich eines Längenabschnittes geringeren Durchmesser liegen, ein Überströmen von Fluid stattfinden. Somit ergeben sich je nach Stellung des Ventilschiebers 17 unterschiedliche fluidische Verschaltungen zwischen den Ventilkanälen 7.

Das Impulsventil des Ausführungsbeispiels ist als 5/2-Wegeventil konzipiert, wobei in den beiden durch die Endstellungen vorgegebenen Schaltstellungen jeweils ein als Speisekanal 7a ausgelegter Ventilkanal mit einem von zwei axial benachbarten Arbeitskanälen 7b bzw. 7c verbunden ist, während gleichzeitig der jeweils nicht mit dem Speisekanal 7a verbundene Arbeitskanal mit dem benachbarten zweier axial ganz außen liegender Entlüftungskanäle 7d bzw. 7e in Verbindung steht. Allerdings wären auch andere Ventilfunktionalitäten möglich.

Das abdichtende Zusammenwirken zwischen der Dichtungseinrichtung 24 und dem Ventilschieber 17 findet ohne Weichdichtungen statt. Beide Komponenten bestehen zumindest in den Berührbereichen aus hartem Material und können leichtgängig aneinander abgleiten. Die erforderliche Dichtheit wird durch die präzise Einpassung des Ventilschiebers 17 in die Dichtungseinrichtung 24 gewährleistet. Die Dichtungseinrichtung 24 selbst ist mittels sie umgebender, statisch wirkender Dichtungen 29 gegenüber der Umfangsfläche der Schieberaufnahme 14 abgedichtet.

Der Ventilschieber 17 wird durch kurzzeitige Fluidbeaufschlagung von der einen in die andere Endstellung umgeschaltet. Das hierzu erforderliche, unter einem ausreichend hohen Steuerdruck stehende Antriebsfluid wirkt je nach gewünschter Umschaltrichtung auf die eine oder andere der beiden Stirnfläche 23 ein.

Hierzu sind die beiden axialen Endabschnitte der Schieberaufnahme 14 als Steuerkammern 27 ausgebildet, in die der ventilschieber 17 mit dem jeweils zugeordneten Endabschnitt eintaucht. Über einen das benachbarte Abschlussteil 15a bzw. 15b durchsetzenden Vorsteuerkanal 28 steht die betreffende Steuerkammer 27 mit je einem an das Hauptventil 3 angebauten Vorsteuerventil 32 der Vorsteuerventileinrichtung 1 in Verbindung. Jedes Vorsteuerventil 32 ist außerdem über Vorsteuer-Speisekanäle 33 an eine fluidische Steuerdruckquelle angeschlossen, wobei eine gesonderte Fluideinspeisung möglich ist, oder wie beim Ausführungsbeispiel, eine Abzweigung vom Speisekanal 7a des Hauptventils 3.

Die beiden Vorsteuerventile 32 sind 3/2-Wegeventile und kommunizieren zusätzlich jeweils noch mit einem nicht näher gezeigten Entlüftungskanal. Je nach Schaltstellung eines Vorsteuerventils 32 wird mithin die daran angeschlossene Steuerkammer 27 mit unter einem Steuerdruck stehendem Antriebsfluid versorgt oder zur Atmosphäre entlüftet.

Die Vorsteuerventile 32 sind für elektrische Betätigung ausgelegt. Anschlusskontakte, über die die für die Betätigung erforderlichen elektrischen Betätigungssignale eingespeist werden können, sind bei 34 angedeutet. Es handelt sich bei den Vorsteuerventilen 32 insbesondere um Magnetventile, wenngleich auch andere Bauformen denkbar wären, beispielsweise Piezoventile oder elektrostatisch betätigbare Mikroventile.

Beim Ausführungsbeispiel stehen die Anschlusskontakte 34 mit einer an Bord des Impulsventils 2 befindlichen Steuerelektronik 35 in elektrischer Verbindung, die über eine elektrische Schnittstelle 36 verfügt, die den Anschluss an eine übergeordnete elektronische Steuereinrichtung ermöglicht. Die Betätigungssignale könnten allerdings auch unmittelbar von außerhalb zugeführt werden; das Impulsventil 2 benötigt selbst nicht unmittelbar eine integrierte Steuerelektronik 35.

Der Charakter des Impulsventils äußert sich darin, dass der Ventilschieber 17 nur zum Zwecke des Umschaltens zwischen den Endstellungen mit einem Steuerdruck beaufschlagt werden muss. Ist die Endstellung erreicht, verharrt der Ventilschieber in der entsprechenden Position auch dann, wenn der ihn in diese Position gebrachte Steuerdruck entfernt wurde. Der Ventilschieber 17 bleibt also auch ohne ständige Energiezufuhr in der jeweils gewählten Endstellung.

Damit diese Arretierung auch bei starker mechanischer Beanspruchung des Impulsventils 2 beibehalten wird, beispielsweise bei einer Schwing-Schock-Belastung, sind jedem der beiden axialen Endbereiche des Ventilschiebers 17 Haltemittel 37 zugeordnet, die den Ventilschieber 17 in der Endstellung lösbar gehäusefest fixieren. Die dabei erzeugte Haltekraft ist allerdings geringer als die Stellkraft, die das Antriebsfluid bei entsprechender Ansteuerung eines Vorsteuerventils 32 in entgegengesetzter Richtung auf die Stirnfläche 23 des Ventilschiebers 17 ausüben kann. Damit ist die gewünschte Umschaltfunktion trotz der endlagenseitigen Haltefunktion gewährleistet.

Die den beiden Endabschnitten des Ventilschiebers 17 zugeordneten Haltemittel 37 sind beim Ausführungsbeispiel identisch ausgebildet, so dass die nachfolgende Beschreibung für beide Fälle gilt. Es wäre jedoch ohne weiteres auch ein Ventilkonzept möglich, bei dem den beiden Endbereichen des Ventilschiebers 17 unterschiedlich gestaltete Haltemittel zugeordnet sind oder bei dem sich im Bereich nur eines Endbereiches des Ventilschiebers 17 derartige Haltemittel befinden.

Die Haltemittel 37 enthalten eine in axialer Verlängerung des Ventilschiebers 17 gehäusefest angeordnete Permanentmagneteinrichtung 38. Sie hält den Ventilschieber 17 bei Einnahme der zugeordneten Endstellung durch Magnetkraft fest. Die zugeordnete Endstellung liegt wie gesagt dann vor, wenn der Ventilschieber 17 an der oben erwähnten Anschlageinrichtung 22 zur Anlage gelangt ist. Diese Anschlageinrichtung 22 befindet sich jeweils axial zwischen dem Ventilschieber 17 und der zugeordneten Permanentmagneteinrichtung 38.

Die Anordnung ist so getroffen, dass der Ventilschieber 27 bei Einnahme einer Endstellung mit einem axialen Abstand "a" vor der Permanentmagneteinrichtung 38 zu liegen kommt. In dem durch diesen axialen Abstand "a" definierten Zwischenraum befindet sich zweckmäßigerweise kein ferromagnetisches Material, so dass das Magnetfeld zwischen Permanentmagneteinrichtung 38 und Ventilschieber 17 keine besondere Leitung oder gar Verstärkung erfährt und folglich die zwischen den beiden Komponenten wirkenden Anziehungskräfte stark von der Größe des erwähnten axialen Abstandes "a" abhängen.

Somit kann durch Wahl eines geeigneten axialen Abstandes "a" dem Steuerdruck Rechnung getragen werden, mit dem der Ventilschieber 17 zum Zwecke seines Umschaltens beaufschlagt wird. Je kleiner dieser Steuerdruck und folglich auch die durch ihn hervorgerufene Stellkraft ist, desto kleiner können die magnetischen Haltekräfte sein, um die Umschaltfunktion zu gewährleisten. Entsprechend kann man in Verbindung mit hohen Stellkräften einen relativ geringen axialen Abstand "a" wählen, zugunsten einer hohen Haltekraft.

Der Vorteil dieses Konzepts liegt darin, dass man auf der Basis ein und desselben Typs von Permanentmagneteinrichtung 38 unterschiedlichen Steuerdrücken Rechnung tragen kann, indem man lediglich unterschiedliche Anschlageinrichtungen 22 verwendet, die verschiedene Abstände zwischen dem die Endlage einnehmenden Ventilschieber 17 und der zugeordneten Permanentmagneteinrichtung 38 vorgeben.

Ein weiterer Vorteil der Haltemittel 37 resultiert daraus, dass die Anschlageinrichtung 22 unabhängig von der ihr zugeordneten Permanentmagneteinrichtung 38 axial gehäusefest abgestützt ist. Die beim Endaufprall des Ventilschiebers 17 in die Anschlageinrichtung 22 eingeleiteten Kräfte werden somit nicht an die Permanentmagneteinrichtung 38 abgegeben, sondern unter Umgehung derselben direkt in das Ventilgehäuse 8. Auch bei starkem Aufprall ist somit eine Beschädigung oder Zerstörung der Permanentmagneteinrichtung 38 ausgeschlossen.

Bei der abgebildeten bevorzugten Ausführungsform umfassen die Haltemittel 37 ein im wesentlichen hülsenförmiges, bevorzugt einstückiges Abstützelement 42, das in den zugeordneten Endabschnitt der Schieberaufnahme 14 passend eingesetzt ist. Es hat eine kreiszylindrische Außenkontur entsprechend der ebenfalls kreiszylindrischen Innenkontur der Schieberaufnahme 14.

Je ein solches Abstützelement 42 liegt axial zwischen der Dichtungseinrichtung 24 und der benachbarten Abschlusswand 16. Es stützt sich an beiden Komponenten gleichzeitig axial ab und sorgt somit für eine bezüglich dem Ventilgehäuse 8 axial unbewegliche Festlegung der Dichtungseinrichtung 24.

Einstückiger Bestandteil des Abstützelementes 42 ist ein topfförmiger Körper 43. Dessen sich rechtwinkelig zur Längsachse 45 der Schieberaufnahme 14 erstreckender Boden 44 befindet sich zwischen dem Ventilschieber 17 und der Permanentmagneteinrichtung 38 und bildet die Anschlageinrichtung 22.

Der topfförmige Körper 43 ist so orientiert, dass seine Öffnung der Abschlusswand 16 und mithin auch der dieser vorgelagerten Permanentmagneteinrichtung 38 zugewandt ist. Dabei kommt die Permanentmagneteinrichtung 38 innerhalb des topfförmigen Körpers 43 zu liegen und wird am Außenumfang von der hohlzylindrischen Umfangswand 46 des topfförmigen Körpers 43 umschlossen, die sich mit ihrer ringförmigen Stirnfläche 47 in axialer Richtung an der Abschlusswand 16 abstützt. Die Permanentmagneteinrichtung 38 kommt somit in dem zwischen dem topfförmigen Körper 43 und der gehäuseseitigen Abschlusswand 16 definierten Aufnahmeraum 48 zu liegen.

Zum abstützenden Zusammenwirken mit der Dichtungseinrichtung 24 verfügt das Abstützelement 42 über eine hohlzylindrische Abstützwand 52, die sich ausgehend von dem Boden 44 in bezüglich der Umfangswand 46 entgegengesetzter axialer Richtung erstreckt, die mit ihrer Stirnfläche 53 die Dichtungseinrichtung 24 beaufschlagt.

Die Steuerkammer 27 befindet sich in dem von der Abstützwand 52 umgrenzten Bereich. Entsprechend der jeweiligen Stellung taucht der Ventilschieber 17 mit seinem Endabschnitt mehr oder weniger weit in den von der Abschlusswand 52 umgrenzten Raum ein.

Der topfförmige Körper 53 muss nicht notwendigerweise Bestandteil eines Abstützelementes der beschriebenen Art sein. Es kann sich bei ihm auch um einen eigenständigen Körper handeln.

Der die Anschlageinrichtung 22 bildende Boden 44 überbrückt den gesamten axialen Abstand "a" zwischen der Permanentmagneteinrichtung 46 und der Stirnfläche 23 des sich in der zugeordneten Endstellung befindenden Ventilschiebers 17.

Der Boden 44 und mithin die Anschlageinrichtung 22 besteht aus nichtferromagnetischem Material und bevorzugt aus Kunststoffmaterial. Handelt es sich um einen topfförmigen Körper 43 besteht auch dieser zweckmäßigerweise zur Gänze aus solchem Material. Gleiches gilt für das gegebenenfalls vorhandene Abstützelement 42.

Um die magnetische Anziehungskraft zu gewährleisten, besteht der Ventilschieber 17 beim Ausführungsbeispiel zur Gänze aus ferromagnetischem Material, und zwar vorzugsweise aus weichmagnetischem Material. Allerdings wäre es auch möglich, diese Materialwahl auf den der Permanentmagneteinrichtungen zugewandten Endabschnitt des Ventilschiebers zu beschränken. Beispielsweise könnten die Endabschnitte des Ventilschiebers 17 aus weichmagnetischem Metall bestehen, während der übrige Bestandteil aus Kunststoffmaterial besteht, das an die metallischen Endabschnitte angeformt ist.

Bei einer anderen Ausführungsvariante besteht der Ventilschieber insgesamt aus nichtferromagnetischem Material, wobei er an seinem der Permanentmagneteinrichtung 38 zugewandten Endabschnitt mit mindestens einem ferromagnetischen, vorzugsweise weichmagnetischen Materialstück 54 bestückt ist, wie dies in der Zeichnung strichpunktiert angedeutet ist. Das Materialstück 54 kann beispielsweise als Einsatz in einen im übrigen aus Kunststoffmaterial oder aus Aluminiummaterial bestehenden Ventilschieber 17 eingesetzt sein.

Um ein vergleichbares Wärmeausdehnungsverhalten zu erzielen, sollten der Ventilschieber 17 und die Dichtungseinrichtung 24 möglichst aus dem gleichen Material bestehen.

Die Permanentmagneteinrichtung 38 ist beim Ausführungsbeispiel scheibenförmig ausgebildet und koaxial zum Ventilschieber 17 bzw. der Schieberaufnahme 14 angeordnet. Sie kann sich aus mehreren Komponenten zusammensetzen, beispielsweise aus einer Kombination permanentmagnetischer und weichmagnetischer Komponenten. Vorzugsweise besteht sie jedoch aus einem einzigen permanentmagnetischem Bauteil, wie dies beim Ausführungsbeispiel der Fall ist.

Eine besonders einfache Kanalführung für die Vorsteuerkanäle 28 ergibt sich, wenn der betreffende Vorsteuerkanal 28 durch die Permanentmagneteinrichtung 38 und zweckmäßigerweise auch die Anschlageinrichtung 33 hindurch in die zugeordnete Steuerkammer 27 einmündet. Beim Ausführungsbeispiel werden beide Komponenten durch den Vorsteuerkanal 28 axial durchsetzt, zweckmäßigerweise im Zentrum. Die Permanentmagneteinrichtung 38 kann in diesem Fall als zentral gelochte Dauermagnetscheibe ausgeführt sein.

Um von Fertigungs- und Montagetoleranzen weitestgehend unabhängig zu sein, ist beim Ausführungsbeispiel die Permanentmagneteinrichtung 38 in dem Aufnahmeraum 48 axial geringfügig spielbehaftet untergebracht. Sie liegt lose in diesem Aufnahmeraum 48, wobei sie umfangsseitig durch die Umfangswand 46 abgestützt ist, in axialer Richtung jedoch geringfügiges Bewegungsspiel hat. Der axiale Abstand zwischen dem Boden 44 und der Abschlusswand 16 ist also geringfügig größer als die Dicke der Permanentmagneteinrichtung 38.

Somit ist sichergestellt, dass auch unter ungünstigen Toleranzkombinationen keine axialen Kräfte von der Anschlageinrichtung 22 in die Permanentmagneteinrichtung 38 eingeleitet werden, wenn der Ventilschieber 17 auf die Anschlageinrichtung 22 aufprallt.

Die beispielsgemäßen Haltemittel haben den Vorteil, dass durch sie praktisch kein Verschleiß an ihnen selbst und am Ventilschieber 17 auftritt, was die Lebensdauer des Impulsventils beträchtlich erhöht. Die Anzahl der Bauteiltoleranzen, die sich auf die Höhe der magnetischen Haltekraft auswirken könnten, sind erheblich reduziert, was eine gleichzeitige Reduzierung des für die Betätigung des Ventilschiebers minimal erforderlichen Steuerdruckes zur Folge hat. Die gewünschte magnetische Haltekraft kann über den durch die Anschlageinrichtung 22 vorgegebenen axialen Abstand "a" vorgegeben werden, so dass man Ventile mit unterschiedlicher magnetischer Haltekraft auslegen kann, auch wenn die Permanentmagneteinrichtung stets die gleiche ist.

Im Betrieb des Impulsventils kann der Ventilschieber 17 durch entsprechende Aktivierung der Vorsteuerventileinrichtung 1 in die eine oder andere der beiden Endstellungen bewegt werden. Die jeweilige Endstellung ist dadurch definiert, dass der Ventilschieber 17 an der zugeordneten Anschlageinrichtung 22 zur Anlage gelangt. Anschließend bleibt der Ventilschieber 17 ungeachtet einer etwaigen mechanischen Beanspruchung des Impulsventils 12 durch die Permanentmagneteinrichtung 38 zuverlässig in der Endstellung festgehalten, bis durch neuerliche Aktivierung der Vorsteuerventileinrichtung 1 eine die Magnetkraft übersteigende, entgegengesetzt wirkende fluidische Stellkraft auf den Ventilschieber 17 ausgeübt wird, so dass sich dieser in die andere Endstellung verlagert, wo sich entsprechende Verhältnisse einstellen.

## Patentansprüche

1. Vorgesteuertes Impulsventil, mit einem durch eine Vorsteuerventileinrichtung (1) fluidisch betätigbaren Hauptventil (3), das einen in einem Ventilgehäuse (8) durch impulsartige axiale Fluidbeaufschlagung zwischen zwei axialen Endstellungen umschaltbaren Ventilschieber (17) aufweist, wobei wenigstens einem axialen Endbereich des Ventilschiebers (17) Haltemittel (37) zur lösbaren gehäusefesten Fixierung des eine Endstellung einnehmenden, axial nicht fluidbeaufschlagten Ventilschiebers (17) zugeordnet sind, wobei die Haltemittel (37) eine in axialer Verlängerung des Ventilschiebers (17) gehäusefest angeordnete Permanentmagneteinrichtung (38) enthalten, die den die zugeordnete Endstellung einnehmenden Ventilschieber (17) durch Magnetkraft festhält, **dadurch gekennzeichnet, dass** der Ventilschieber(17) in der durch Magnetkraft gehaltenen Endstellung mit einem nicht durch ferromagnetisches Material überbrückten axialen Abstand zur Permanentmagneteinrichtung (38) angeordnet ist, der durch eine axial zwischen der Permanentmagneteinrichtung (38) und dem Ventilschieber (17) angeordnete, mit der zugewandten Stirnfläche (23) des Ventilschiebers (17) zusammenarbeitende Anschlageinrichtung (22) vorgegeben ist, die unabhängig von der Permanentmagneteinrichtung (38) axial gehäusefest abgestützt ist, wobei die Anschlageinrichtung (22) vom Boden eines topfförmigen Körpers (43) gebildet ist, der mit vom Ventilschieber (17) axial abgewandter Öffnung in eine den Ventilschieber (17) enthaltende Schieberaufnahme (14) eingesetzt ist, wobei er sich mit der Stirnfläche (47) seiner Umfangswand (46) axial an der die Schieberaufnahme (14) begrenzenden gehäuseseitigen Abschlusswand (16) abstützt und wobei in dem zwischen dem topfförmigen Körper (43) und der gehäuseseitigen Abschlusswand (16) definierten Aufnahmeraum (48) die Permanentmagneteinrichtung (38) untergebracht ist.

2. Impulsventil nach Anspruch 1, **dadurch gekennzeichnet, dass** die Anschlageinrichtung (22) den gesamten axialen Abstand zwischen der Permanentmagneteinrichtung (38) und dem die zugeordnete Endstellung einnehmenden Ventilschieber (17) überbrückt.

3. Impulsventil nach Anspruch 1 oder 2, **dadurch gekennzeichnet, dass** die Anschlageinrichtung (22) aus nichtferromagnetiscliem Material und insbesondere aus Kunststoffmaterial besteht.

4. Impulsventil nach einem der Ansprüche 1 bis 3, **dadurch gekennzeichnet, dass** zumindest der der Permanentmagneteinrichtung (38) zugewandte Endabschnitt des Ventilschiebers (17) und zweckmäßigerweise der gesamte Ventilschieber (17) aus ferromagnetischem, vorzugsweise weichmagnetischem Material besteht.

5. Impulsventil nach einem der Ansprüche 1 bis 3, **dadurch gekennzeichnet, dass** der Ventilschieber aus nichtferromagnetischem Material besteht und an seinem der Permanentmagneteinrichtung (38) zugewandten Endabschnitt mindestens ein ferromagnetisches, vorzugsweise weichmagnetisches Materialstück (54) trägt.

6. Impulsventil nach einem der Ansprüche 1 bis 5, **dadurch gekennzeichnet, dass** die Permanentmagneteinrichtung (38) scheibenförmig ausgebildet ist und koaxial zum Ventilschieber (17) angeordnet ist, wobei sie zweckmäßigerweise aus einem einzigen permanentmagnetischen Bauteil besteht.

7. Impulsventil nach einem der Ansprüche 1 bis 6, **dadurch gekennzeichnet, dass** der topfförmige Körper (43) einstückiger Bestandteil eines koaxial in die Schieberaufnahme (14) eingesetzten, bevorzugt hülsenartig ausgebildeten Abstützelementes (42) ist, das eine axial entgegengesetzt zur Umfangswand (46) des topfförmigen Körpers (43) in koaxialer Verlängerung zu dieser vom Boden (44) des topfförmigen Körpers (43) wegragende Abstützwand (52) aufweist, die eine den Ventilschieber (17) koaxial umschließende Dichtungseinrichtung (24) axial abstützt.

8. Impulsventil nach einem der Ansprüche 1 bis 7, **dadurch gekennzeichnet, dass** der topfförmige Körper (43) und gegebenenfalls das Abstützelement (42) aus Kunststoffmaterial besteht.

9. Impulsventil nach einem der Ansprüche 1 bis 8, **dadurch gekennzeichnet, dass** die Permanentmagneteinrichtung (38) axial spielbehaftet zwischen der Anschlageinrichtung (22) und der gehäuseseitigen Abschlusswand (16) der den Ventilschieber (17) enthaltenden Schieberaufnahme (14) angeordnet ist.

10. Impulsventil nach einem der Ansprüche 1 bis 9, **dadurch gekennzeichnet, dass** der der Anschlageinrichtung (22) zum ventilschieber (17) hin axial vorgelagerte Abschnitt der den Ventilschieber (17) enthaltenden Schieberaufnahme (14) eine durch die Vorsteuerventileinrichtung (1) gesteuert mit einem Antriebsfluid beaufschlagbare Steuerkammer (27) bildet.

11. Impulsventil nach Anspruch 10, **dadurch gekennzeichnet, dass** die Steuerkammer (27) mit mindestens einer die Anschlageinrichtung (22) und die Permanentmagneteinrichtung (38), insbesondere zentral, axial durchsetzenden Vorsteuerkanal (28) kommuniziert.

12. Impulsventil nach einem der Ansprüche 1 bis 11, **dadurch gekennzeichnet, dass** die Vorsteuerventileinrichtung (1) mit dem Hauptventil (3) zu einer selbsttragenden Baugruppe zusammengefasst ist.

13. Impulsventil nach einem der Ansprüche 1 bis 12, **dadurch gekennzeichnet, dass** die Vorsteuerventileinrichtung (1) für jede Umschaltrichtung des Ventilschiebers (17) ein elektrisch betätigbares Vorsteuerventil (32) aufweist, insbesondere ein Magnetventil.

14. Impulsventil nach einem der Ansprüche 1 bis 13, **dadurch gekennzeichnet, dass** beiden axialen Endbereichen des Ventilschiebers (17) auf Magnetkraft basierende Haltemittel (37) zugeordnet sind.

## Claims

1. Pilot-controlled pulse valve, with a main valve (3) capable of fluidic actuation by means of a pilot control valve device (1), which has a slide valve (17) in a valve housing (8), capable of being switched by means of pulse-like axial fluid pressure imposition between two axial end positions, wherein retaining means (37) are assigned to at least one axial end area of the slide valve (17) for the releasable housing-secured fixing of the slide valve (17) which is not subjected to axial fluid pressure imposition, occupying one end position, wherein the retaining means (37) contain a permanent magnet device (38) arranged secured to the housing in the axial extension of the slide valve (17), which secures by magnetic force the slide valve (17) occupying the allocated end position, **characterised in that** the slide valve (17) is arranged in the end position held by magnetic force at an axial distance interval, not bridged by ferromagnetic material, from the permanent magnet device (38), this distance interval being determined by a stop device (22) arranged between the permanent magnet device (38) and the slide valve (17), interacting with the face (23) of the slide valve (17) turned towards it, which is axially supported, secured to the housing, independently of the permanent magnet device (38), wherein the stop device (22) is formed from the base of a pot-shaped body (43) which is inserted by means of an aperture axially facing away from the slide valve (17) into a slide mounting (14) containing the slide valve (17), wherein it is supported with the face (47) of its circumferential wall (46) axially at the housing-side closure wall (16) delimiting the slide mounting (14), and wherein the permanent magnet device (38) is located in the accommodation space (48) defined between the pot-shaped body (43) and the housing-side closure wall (16).

2. Pulse valve according to Claim 1, **characterised in that** the stop device (22) bridges the entire axial distance interval between the permanent magnet device (38) and the slide valve (17) occupying the allocated end position.

3. Pulse valve according to Claim 1 or 2, **characterised in that** the stop device (22) consists of non-ferromagnetic material and in particular of plastic material.

4. Pulse valve according to any one of Claims 1 to 3, **characterised in that** at least the end section of the slide valve (17) facing towards the permanent magnet device (38) and, advantageously, the entire slide valve (17) consists of ferromagnetic material, preferably weakly magnetic material.

5. Pulse valve according to any one of Claims 1 to 3, **characterised in that** the slide valve consists of non-ferromagnetic material and at its end section facing towards the permanent magnet device (38) carries at least one ferromagnetic, preferably weakly magnetic, material piece (54).

6. Pulse valve according to any one of Claims 1 to 5, **characterised in that** the permanent magnet device (38) is designed as disk-shaped and is arranged coaxially to the slide valve (17), wherein, advantageously, it consists of one single permanently magnetic component.

7. Pulse valve according to any one of Claims 1 to 6, **characterised in that** the pot-shaped body (43) is a single-piece component of a support element (42) formed preferably in the nature of a sleeve, inserted coaxially into the slide mounting (14), which has a support wall (52), axially opposed to the circumferential wall (46) of the pot-shaped body (43), projecting away in the coaxial extension to this from the base (44) of the pot-shaped body (43), said support wall (52) axially supporting a sealing device (24) coaxially surrounding the slide valve (17).

8. Pulse valve according to any one of Claims 1 to 7, **characterised in that** the pot-shaped body (43) and, where appropriate, the support element (42) consists of plastic material.

9. Pulse valve according to any one of Claims 1 to 8, **characterised in that** the permanent magnet device (38) is arranged, axially subject to play, between the stop device (22) and the housing-side closure wall (16) of the slide mounting (14) containing the slide valve (17).

10. Pulse valve according to any one of Claims 1 to 9, **characterised in that** the section of the slide mounting (14) containing the slide valve (17), mounted axially in front of the stop device (22) towards the slide valve (17), forms a control chamber 27) capable of being subjected to drive fluid in a manner controlled by the pilot control valve device (1).

11. Pulse valve according to Claim 10, **characterised in that** the control chamber (27) communicates with at least one pilot control channel (28) passing axially, in particular centrally, through the stop device (22) and the permanent magnet device (38).

12. Pulse valve according to any one of Claims 1 to 11, **characterised in that** the pilot control valve device (1) is grouped together with the main valve (3) to form a self-supporting module.

13. Pulse valve according to any one of Claims 1 to 12, **characterised in that** the pilot control valve device (1) has an electrically actuatable pilot control valve (32), in particular a magnetic valve, for each switchover direction of the slide valve (17).

14. Pulse valve according to any one of Claims 1 to 13, **characterised in that** retaining means (37) based on magnetic force are allocated to both axial end areas of the slide valve (17).

## Revendications

1. Vanne à impulsion précommandée, comprenant une vanne principale (3) pouvant être actionnée de façon fluidique par un dispositif de vanne de précommande (1), qui présente un robinet-vanne (17) pouvant être commuté dans un boîtier de vanne (8) par une alimentation en fluide axiale par impulsion entre deux positions extrêmes axiales, moyennant quoi des moyens de retenue (37) destinés à la fixation solidaire du boîtier et amovible du robinet-vanne (17) occupant une position finale et non alimentée en fluide axialement sont attribués à au moins une zone d'extrémité axiale du robinet-vanne (17), les moyens de retenue (37) contenant un dispositif d'aimant permanent (38) disposé de façon solidaire du boîtier dans le prolongement axial du robinet-vanne (17), lequel dispositif maintient le robinet-vanne (17) occupant la position finale attribuée par une force magnétique, **caractérisée en ce que** le robinet-vanne (17) est disposé dans la position finale maintenue par la force magnétique avec une distance axiale au dispositif d'aimant permanent (38), non surmontée par du matériau ferromagnétique, laquelle distance est prédéfinie par un dispositif de butée (22) disposé axialement entre le dispositif d'aimant permanent (38) et le robinet-vanne (17) et coopérant avec la face frontale (23) attribuée du robinet-vanne (17), lequel dispositif de butée est soutenu de façon axiale et solidaire du boîtier indépendamment du dispositif d'aimant permanent (38), le dispositif de butée (22) étant formé par le fond d'un corps (43) en forme de pot, qui est inséré avec l'ouverture opposée axialement au robinet-vanne (17) dans un logement de robinet (14) contenant le robinet-vanne (17), sachant que ce corps s'appuie avec la face frontale (47) de son bord périphérique (46) axialement sur la paroi de fermeture (16) côté boîtier délimitant le logement de robinet (14), et que le dispositif d'aimant permanent (38) est logé dans l'espace de logement (48) défini entre le corps (43) en forme de pot et la paroi de terminaison (16) côté boîtier.

2. Vanne à impulsion selon la revendication 1, **caractérisée en ce que** le dispositif de butée (22) surmonte l'ensemble de la distance axiale entre le dispositif d'aimant permanent (38) et le robinet-vanne (17) occupant la position finale attribuée.

3. Vanne à impulsion selon la revendication 1 ou 2, **caractérisée en ce que** le dispositif de butée (22) est à base de matériau non ferromagnétique et en particulier à base de matériau plastique.

4. Vanne à impulsion selon l'une quelconque des revendications 1 à 3, **caractérisée en ce qu'**au moins la partie d'extrémité, attribuée au dispositif d'aimant permanent (38), du robinet-vanne (17) et de façon appropriée l'ensemble du robinet-vanne (17) est à base de matériau ferromagnétique, de préférence magnétique doux.

5. Vanne à impulsion selon l'une quelconque des revendications 1 à 3, **caractérisée en ce que** le robinet-vanne est à base de matériau non ferromagnétique et porte sur son extrémité attribuée au dispositif d'aimant permanent (38) au moins une partie en matériau (54) ferromagnétique, de préférence magnétique doux.

6. Vanne à impulsion selon l'une quelconque des revendications 1 à 5, **caractérisée en ce que** le dispositif d'aimant permanent (38) est réalisé en forme de disque et est disposé sur le même axe que le robinet-vanne (17), ce dispositif d'aimant permanent étant de façon appropriée à base d'un composant unique à magnétisme permanent.

7. Vanne à impulsion selon l'une quelconque des revendications 1 à 6, **caractérisée en ce que** le corps (43) en forme de pot est un composant d'une seule pièce d'un élément de soutien (42) inséré sur le même axe dans le logement de robinet (14), de préférence conçu en forme de douille, qui présente une paroi de soutien (52) dépassant axialement dans le sens opposé à la paroi périphérique (46) du corps (43) en forme de pot dans le prolongement axial par rapport à cette paroi en s'éloignant du fond (44) du corps (43) en forme de pot, laquelle paroi soutient axialement un dispositif d'étanchéité (24) entourant de façon coaxiale le robinet-vanne (17).

8. Vanne à impulsion selon l'une quelconque des revendications 1 à 7, **caractérisée en ce que** le corps (43) en forme de pot et éventuellement l'élément de soutien (42) est à base de matériau plastique.

9. Vanne à impulsion selon l'une quelconque des revendications 1 à 8, **caractérisée en ce que** le dispositif d'aimant permanent (38) est disposé axialement avec du jeu entre le dispositif de butée (22) et la paroi terminale (16) côté boîtier du logement de robinet (14) contenant le robinet-vanne (17).

10. Vanne à impulsion selon l'une quelconque des revendications 1 à 9, **caractérisée en ce que** la partie, placée axialement en amont du dispositif de butée (22) en direction du robinet-vanne (17) du logement de robinet (14) contenant le robinet-vanne (17), forme une chambre de commande (27) pouvant être alimentée avec un flux d'entraînement de façon commandée par le dispositif de vanne de précommande (1).

11. Vanne à impulsion selon la revendication 10, **caractérisée en ce que** la chambre de commande (27) communique avec au moins un canal de précommande (28) traversant axialement, en particulier de façon centrale, le dispositif de butée (22) et le dispositif d'aimant permanent (38).

12. Vanne à impulsion selon l'une quelconque des revendications 1 à 11, **caractérisée en ce que** le dispositif de vanne de précommande (1) est regroupé avec la vanne principale (3) en un ensemble autoporteur.

13. Vanne à impulsion selon l'une quelconque des revendications 1 à 12, **caractérisée en ce que** le dispositif de vanne de précommande (1) présente pour chaque sens de commutation du robinet-vanne (17) une vanne de précommande (32) pouvant être actionnée électriquement, en particulier une vanne magnétique.

14. Vanne à impulsion selon l'une quelconque des revendications 1 à 13, **caractérisée en ce que** des moyens de retenue (37) basés sur la force magnétique sont attribués aux deux zones d'extrémité axiales du robinet-vanne (17).
